# EUROPEAN PATENT SPECIFICATION

(11) **EP 1 084 048 B1**
(45) Date of publication and mention of the grant of the patent: **19.07.2006**
(21) Application number: 99920286.4
(22) Date of filing: 03.05.1999
(51) Int. Cl.: B60J 1/02

(54) **SELF-DISPENSING FASTENER FOR PHOTOCURING ADHESIVE**
BEFESTIGUNGSELEMENT MIT SELBSTAUSGABEGERÄT FÜR PHOTOHÄRTUNGSKLEBSTOFF
FIXATION AUTO-DISTRIBUTRICE D'ADHESIF PHOTODURCISSABLE

(30) Priority: 11.05.1998 US 75583
(43) Date of publication of application: 21.03.2001
(73) Proprietor: Forrester Company, Clinton Township, MI 48035 (US)
(72) Inventor: SWEENEY, Theodore, J., Jr., Grosse Pointe Farms, MI 48236 (US)
(74) Representative: Riemens, Roelof Harm
(86) International application number: PCT/US1999/009635
(87) International publication number: WO 1999/058355

(56) References cited:
- JP-A- 60 219 181
- JP-A- 61 249 812
- US-A- 5 044 852
- US-A- 5 277 530
- US-A- 5 695 236
- US-A- 5 851 045

## Description

### Field of Invention

This invention relates to a self-dispensing fastener defined in the preamble of claim 1, a fastener of this type is disclosed in US-A-5,277,530.

### Background Of The Invention

US-A- 5,277,530 shows a fastener for quick attachment to a substrate. The fastener is simply depressed against the substrate and a quick-setting adhesive is dispensed into the interface between the fastener and the substrate thereby attaching the fastener. Anaerobic and several other adhesives may be used quite satisfactorily with such fasteners. However, there are some situations where it has become desirable to utilize a photocuring adhesive rather than those previously used. As used herein, a photosensitive adhesive is one which cures upon exposure to radiation in the ultraviolet light spectrum. Utilizing photocuring adhesives requires that the adhesive be effectively shielded from the curing radiation, otherwise the adhesive will cure prematurely in the fastener rendering the fastener useless. At the same time, when the fastener is pressed against the substrate to which it is to be secured, it must be possible to illuminate the adhesive at the interface between the fastener and the substrate to cure it. As used herein, the term "illuminate" includes radiation in the UV spectrum.

### Summary of the Invention

The object of the invention is to provide a self-dispensing fastener for photocuring adhesive.

This object is achieved by a self-dispensing fastener according to claim 1. In one embodiment, the adhesive is stored in a reservoir made of UV opaque material which is placed in a UV transparent fastener such that upon expelling the adhesive into an interface between the fastener and the substrate to which the fastener is to be secured, UV light can contact the adhesive in such interface to effect the cure. In another embodiment the fastener has a UV opaque chamber in which the adhesive is stored, and the portion which forms an interface with the substrate is sufficiently transparent to UV radiation that adhesive expelled into the interface from such chamber can be cured. In still another embodiment, the fastener is opaque to the UV spectrum, but is used on UV transparent substrates, such as glass or clear plastic, such that UV radiation may reach the photocuring adhesive in the interface between the fastener and the substrate by having the light pass through the substrate beneath the fastener. In another embodiment, the adhesive reservoir and plunger are made of a material which is opaque to UV radiation but at least one of them is transparent to visible light, whereby the reservoir when filled with adhesive and stopped with a plunger may be visually inspected to determine whether it contains adhesive. Other embodiments which may be combinations of the aforesaid will become apparent as this description proceeds.

### Brief Description Of The Drawings

FIGURE 1 is a perspective view of the rear portion of a motor vehicle utilizing my invention to hold the rear window in the vehicle body during assembly of the vehicle;
FIGURE 2 is a fragmentary perspective view of a motor vehicle window showing my improved locators or fasteners adhered thereto;
FIGURE 3 is a cross-sectional view taken on the line 3-3 of Fig. 1;
FIGURE 4 is a perspective view of another embodiment of the invention;
FIGURE 5A is a cross-sectional view through the fastener of Fig. 4; and
FIGURE 5B is a cross-sectional view through the fastener of Fig. 4 after the nose portion of the fastener has been broken off.

### Brief Description Of The Preferred Embodiment

While my invention is usable for fixing a fastener or other part to any substrate utilizing a photocuring adhesive, I have disclosed it here in connection with fasteners used to locate and hold window glass in place in a vehicle body as it passes down the assembly line during construction of the motor vehicle.

In many instances, the windows of motor vehicles are held in place utilizing a construction adhesive which requires several hours to cure. Because the windows are installed in the body while it is still on the assembly line and subject to vibration and jostling, means must be provided to locate and hold the windows in place and prevent unwanted shifting thereof in the window opening while assembly of the vehicle continues and before the construction adhesive has fully cured. Various expedients have been used in the past with varying success, but there has remained the need for a locating and holding device (or fastener) which is both easy to use and inexpensive.

Referring to the fasteners disclosed in the aforesaid patents, it was thought such a fastener could be attached to the window glass and adapted to cooperate with the vehicle body to hold the glass in place. However, in some instances, automobile manufacturers were not satisfied with the bonding strength of prior adhesives to secure the fasteners to the window glass. It was discovered that the quick-setting adhesives heretofore used in such fasteners did not hold quite as well on windows painted with an opaque frit at the marginal edges to hide the construction adhesive. While the construction adhesive adhered sufficiently to the frit coating, the quick-setting adhesive of the fasteners did not adhere sufficiently to satisfy all the vehicle manufacturers.

A quick-setting adhesive I have discovered that will satisfy the vehicle manufacturers who disliked the bonding strength of the prior adhesives to the frit coated surface of the windows, is a photocuring adhesive. Such adhesive exists which may be cured rapidly, i.e., in but a few seconds, utilizing visible light or ultraviolet light. However, the opaque frit on the marginal edge of the window sufficiently blocks the radiation that it cannot penetrate through to the adhesive to effect a quick cure. In fact, the fasteners themselves have been heretofore made of a opaque plastic material that, similar to the frit, prevents illumination reaching the adhesive. If photocuring adhesive is stored in fasteners which are not opaque, it must be shielded from illumination otherwise the adhesive will cure in the fastener rendering them useless.

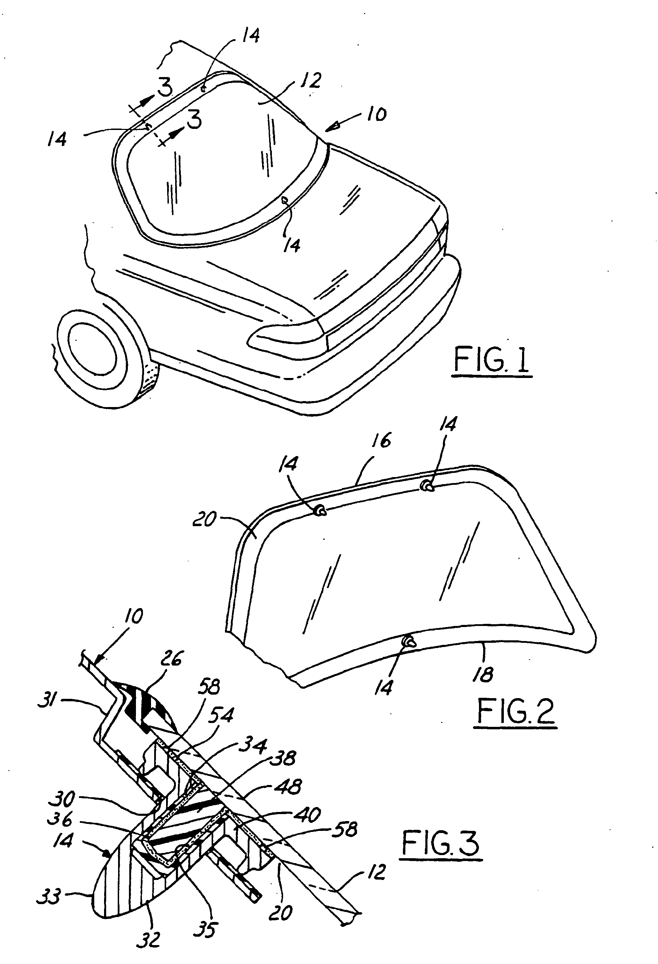

In the drawings, I show the rear portion of a motor vehicle 10 having a rear light (or window) 12 installed therein and located by fasteners or locators 14. The fasteners are disposed in spaced relation at the marginal edge of the rear light as shown in Fig. 2 - two being adjacent the top edge 16, and one adjacent the bottom 18. Because the glass is held in the window opening by a construction adhesive (not shown) which takes some time to cure, the locators hold the glass in place during such curing. An opaque frit layer 20 overlies the marginal edge of the glass to hide the construction adhesive and thereby improve the aesthetic appearance of the installed glass. The frit layer 20 is sufficiently opaque to illumination that rapid cure of a photocuring adhesive by exposing the backside of the glass to illumination is ineffective.

Referring now to Figs. 2 and 3 as well as Fig. 4 of U.S. Patent 5,277,530, and with respect to which I have used, where convenient, corresponding reference numerals, I provide a fastener, sometimes referred to herein as a "locator", having a body 32, with an integral flange 40 at one end and a tapered locating nose 33 at the opposite end. The body 32 is generally elongated and interiorly provided with an adhesive storage cavity 35 similar to the arrangement shown in Patent 5,277,530. In the preferred embodiment, an adhesive reservoir 34 is received in the cavity 35. The reservoir contains a supply of adhesive 36 which is expelled therefrom by a piston or plunger 38 as the locator is pressed against the glass 12, and extruded into the interface 54 formed between the flange 40 and the glass 12. The details of the reservoir and plunger design, and the operation thereof is fully recited in Patent 5,277,530 and need not be repeated here.

Suffice it that, to deploy the locator and adhere it to the glass, it is positioned as desired on the window, such as in the positions shown in Figs. 1 and 2, and then with the plunger 38 positioned against the glass, the locator is urged against the glass to depress the plunger to expel the adhesive into the interface as at 54. At this point, curing of the adhesive is required.

After the adhesive 36 has cured, the nose 33 is received in an opening 30 in the body panel 31 around the window opening. Construction adhesive, not shown, will lie in the space between the body panel 31 and the glass 12 in engagement with the frit layer 20. In this way, the locator holds the window in place while the construction adhesive cures. A trim strip 26 received over the edge of the glass overlies the body 10 and bridges the gap between the glass and the body.

Because a photocuring adhesive is used in the locator, once the adhesive is extruded into the interface as at 54, the adhesive must be exposed to illumination such as ultraviolet light to cure it. Because the frit layer 20 is too opaque to allow UV radiation therethrough, the adhesive cannot be cured quickly by directing a UV light against the exposed face 48 of the glass. Accordingly, I propose that the locator body 32 and more specifically the flange 40 be molded of a plastic material sufficiently transparent to ultraviolet light that the adhesive at 54 cures quickly. In practice, the entire locator may be transparent to UV radiation.

One such plastic material is sold by BASF under the trademark TURLOX. This is a clear ABS plastic which will allow UV radiation to penetrate the flange 40 to substantially instantly cure the adhesive. Other plastics compatible with the photocuring adhesive may also be used.

I have found that a suitable photocuring adhesive is sold under the trademark DYMAX by Dymax Corporation of 51 Greenwoods Rd., Torrington, Connecticut 06790. This is a polyurethane Oligomer Mixture, sold under the product identification 3-3094. Other adhesives may be used which are sufficiently strong and meet the other requirements of the application.

Once the adhesive has been dispersed into the interface beneath the flange 40, an ultraviolet light is directed toward the locator, and such radiation will pass through the flange and instantly cure the adhesive. I have found that this adhesive adheres well to the frit coating on the automotive glass.

To prevent the adhesive from curing while stored in the reservoir in the locator body before being extruded, the reservoir 34 and the plunger 38 should be made of materials sufficiently opaque to illumination that the adhesive will not cure for long periods. In many, if not most applications, utilizing UV opaque reservoirs and plungers, with UV transparent locator bodies may be the most cost effective approach to use.

It is possible to form the reservoir 34 and plunger 38 of a clear plastic (one transparent to visible light) but opaque to ultraviolet light. For example, an additive identified as Ashland UV81 sold by Ashland Chemical Company may be added to clear polyethylene or polypropylene to render the same sufficiently opaque to UV radiation as to be satisfactory for use in molding the reservoir and plunger. An advantage of a reservoir and plunger which may be transparent to visible light but opaque to UV radiation is to enable visual inspection of reservoir/plunger combinations to verify that there is photocuring adhesive in the reservoir.

Instead of forming both the reservoir and plunger of material opaque to UV radiation but transparent to visible light, only one of the two may be transparent to visible light. For example, the plunger may be transparent to visible light and determining whether the reservoir is properly filled may be visually determined by inspection through the plunger. Or the reverse arrangement may be utilized and inspection conducted through the wall of the reservoir.

There may be instances where it is desirable to use a material for the reservoir which is not opaque to UV radiation. In such instance the body 32 of the locator must be opaque to the UV radiation but the flange nevertheless transparent thereto. In such cases the outer or inner surfaces of the body 32 may be coated with a paint that is opaque or the locator may be made by a two-shot molding technique where the body 32 is molded of a UV opaque resin and the flange 40 of a UV transparent resin.

In those instances where the fastener is to be applied to UV transparent substrates, of course the fastener body, flange 40 and plunger 38 may be opaque, and the UV radiation may be directed against the opposite side of the substrate.

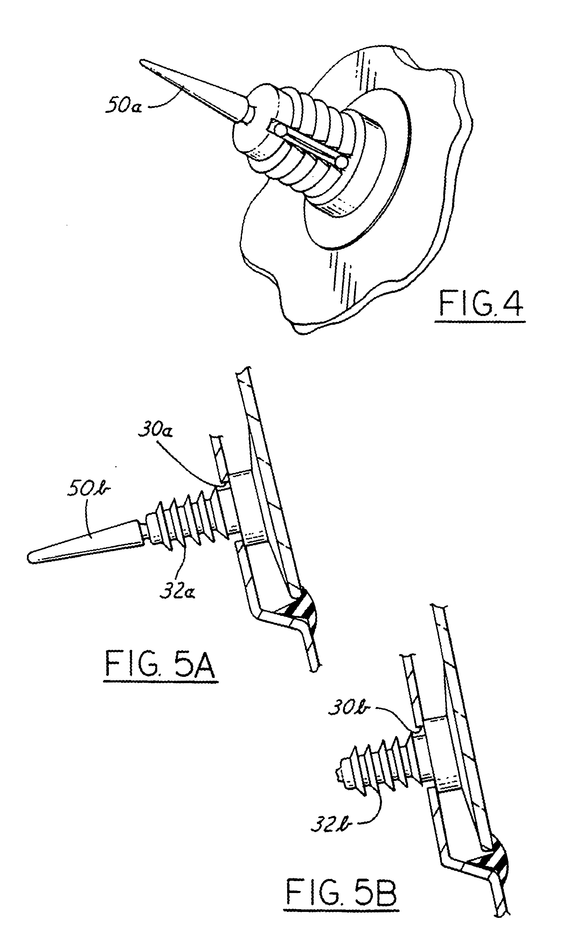

In Figs. 4, 5A and 5B somewhat different locators are shown though they work on exactly the same basis as that previously described. These locators are of a so-called Christmas tree design wherein the locator is pushed through a hole 30a or 30b that is slightly smaller in diameter than the barbs on post 32a or 32b. These locators allow for adjustment in the distance they may be pressed through the holes 30a and 30b and still hold the locator in the hole. Because it may be difficult to find the locator holes 30a or 30b when positioning the window in the window opening, these locators have a long guide stem 50a or 50b which may more easily enter the holes to guide the locator thereinto. After the locator is in place, the stem may be broken off as shown in Fig. 5b. Interiorly, these locators will have reservoirs and plungers, and the bodies and flanges will be made of the types of materials and of an opaqueness as previously described. Obviously, other materials may be utilized for the locators, and for that matter also for the photocuring adhesive than that specified herein as long as the materials will yield the results as above described.

While I have shown the quick-setting, photocuring adhesive being stored in a separate reservoir with a piston, both made of UV opaque plastic, and the flange 40 being UV transparent, it is to be understood that the adhesive may be stored directly in a cavity, serving as a reservoir, in the fastener body without the use of a separate reservoir, provided measures are taken to prevent UV light from reaching the adhesive. To this end, the body surrounding the adhesive may be painted with a UV opaque coating or the material of the body may be opaque while the flange 40 is UV transparent. As mentioned, this may require manufacture of the body members using a two-shot molding technique. Other variations or combinations of UV opaque and transparent materials may suggest themselves to those skilled in this art in view of the foregoing description.

While I have shown the fastener simply as a locating device with a tapered locating nose, the fastener may be shaped to provide a wide variety of fastening or locating designs.

For curing the quick-setting photocuring adhesive, sunlight, or artificial light may be used provided the appropriate band of the spectrum is included.

With the use of photocuring adhesives, it may be desirable to provide a thicker layer of adhesive at the interface between the flange 40 and the substrate (glass, etc.). To accomplish this, the surface of the flange 40 opposed to the substrate may be provided with raised portions such as small dimples 58 scattered over its surface of predetermined height which will space the flange 40 from the glass a determined distance to provide an adhesive thickness as desired. Instead of dimples, channels may be used as suggested in US-Patents 5,044,852 and 5,277,530. Alternatively, radiating ribs could be used.

## Claims

1. Self-dispensing fastener (14) utilizing quick-setting adhesive comprising, in combination:
a body (32) having an adhesive reservoir (34) therein and an integral flange (40);
a plunger (38) in said reservoir sealing the same and projecting therefrom for depression into the reservoir to expel adhesive (36) in the reservoir into the interface (54) formed between said flange (40) and a surface when the fastener is pressed thereagainst; and
an adhesive in the reservoir;
**characterized in that** the adhesive (36) is a UV-curable adhesive and that
said reservoir (34) and said plunger (38) are formed of a UV opaque material and said flange (40) is formed of a UV transparent material.

2. Fastener according to claim 1 wherein said reservoir (34) is separate from the body (32) and said body (32) is UV transparent.

3. Fastener according to claim 1 wherein said reservoir (34) is formed in the body (32) of a UV opaque material and the flange (40) of the body (32) is formed of a UV transparent material.

4. Fastener according to claim 1 wherein said body (32) is formed of a UV transparent material and there is a UV opaque coating on the body (32) covering the reservoir (34).

5. Fastener according to claim 1 wherein said flange (40) is provided with raised portions (58) opposed to a surface to which the fastener is to be secured to determine the thickness of the adhesive layer expelled in the said interface (54).

6. Fastener according to claim 1 wherein said plunger (38) projects from the reservoir (34) below said flange (40) for engagement with a surface to which the fastener is to be secured to expel adhesive (36) from the reservoir (34) when the fastener is pressed against such surface.

7. Fastener according to any one of claims 1 to 6 wherein the reservoir is transparent to visible light.

8. Fastener according to any one of claims 1 to 6 wherein the plunger is transparent to visible light.

9. Fastener according to any one of claims 1 to 6 wherein both the reservoir and plunger are transparent to visible light.

10. Method of locating a window (12) in a motor vehicle (10) comprising the steps of:
providing locating holes in the vehicle body at the window opening;
pressing self-dispensing adhesive locators (14) according to any one of claims 1 to 9 against the window (12) to extrude the adhesive (36) into the interface (54) between the flange and the window;
directing UV radiation against the flange (40) to cure the adhesive (36) in the interface (54) between the window (12) and the flange (40); and
mounting the window (12) in the motor vehicle (10) by aligning the locators (14) on the window with the locator holes in the vehicle body and pressing the window into the window opening.

## Patentansprüche

1. Selbstdispensierende Befestigungsvorrichtung (14), die ein schnell bindendes Haftmittel verwendet, mit in Kombination:
einem Gehäuse (32), mit einem darin befindlichen Haftmittelreservoir (34) und mit einem integralen Flansch (40);
einem Kolben (38) in dem Reservoir, der dieses dicht verschließt und von diesem zum Eindrücken in das Reservoir vorsteht, um Haftmittel (36) in dem Reservoir in die zwischen dem Flansch (40) und einer Oberfläche ausgebildeten Grenzfläche (54) auszutreiben, wenn die Befestigungsvorrichtung dagegen gedrückt wird; und
einem Haftmittel in dem Reservoir;
**dadurch gekennzeichnet, dass** das Haftmittel (36) ein UV-härtbares Haftmittel ist und dass das Reservoir (34) und der Kolben (38) aus einem UV-opaken Material gebildet sind und der Flansch (40) aus einem UV-transparenten Material gebildet ist.

2. Befestigungsvorrichtung nach Anspruch 1, in welchem das Reservoir (34) getrennt vom Gehäuse (32) ist und das Gehäuse (32) UV-transparent ist.

3. Befestigungsvorrichtung nach Anspruch 1, in welchem das Reservoir (34) in dem Gehäuse (32) aus einem UV-opaken Material gebildet ist und der Flansch (40) des Gehäuses (32) aus einem UV-transparenten Material gebildet ist.

4. Befestigungsvorrichtung nach Anspruch 1, in welchem das Gehäuse (32) aus einem UV-transparentem Material gebildet ist und eine UV-opake Beschichtung auf dem Gehäuse (32) vorhanden ist, welcher das Reservoir (34) überzieht.

5. Befestigungsvorrichtung nach Anspruch 1, in welchem der Flansch (40) mit hochstehenden Bereichen (58) versehen ist, die einer Oberfläche gegenüber liegen, an welcher die Befestigungsvorrichtung festzulegen ist, um die Dicke der in die Grenzfläche (54) ausgetriebenen Haftmittelschicht festzulegen.

6. Befestigungsvorrichtung nach Anspruch 1, in welchem der Kolben (38) von dem Reservoir (34) unterhalb des Flansches (40) zum Eingriff mit einer Oberfläche vorsteht, an welcher die Befestigungsvorrichtung festzulegen ist, um Haftmittel (36) aus dem Reservoir (34) auszutreiben, wenn die Befestigungsvorrichtung gegen diese Oberfläche gepresst wird.

7. Befestigungsvorrichtung nach einem der Ansprüche 1 bis 6, in welchem das Reservoir für sichtbares Licht transparent ist.

8. Befestigungsvorrichtung nach einem der Ansprüche 1 bis 6, in welchem der Kolben für sichtbares Licht transparent ist.

9. Befestigungsvorrichtung nach einem der Ansprüche 1 bis 6, in welchem das Reservoir und der Kolben für sichtbares Licht transparent sind.

10. Verfahren zum Zentrieren eines Fensters (12) in einem Kraftfahrzeug (10) mit den Schritten:
Bereitstellen von Zentrierlöchern in dem Fahrzeugkörper an der Fensteröffnung; Pressen von Haftmittel selbstdispensierenden Zentrierern (14) gemäß einem der Ansprüche 1 bis 9 gegen das Fenster (12), um das Haftmittel (36) in die Grenzfläche (54) zwischen dem Flansch und dem Fenster zu extrudieren;
Richten einer UV-Strahlung gegen den Flansch (40), um das Haftmittel (36) in der Grenzfläche (54) zwischen dem Fenster (12) und dem Flansch (40) auszuhärten; und
Montieren des Fensters (12) in dem Kraftfahrzeug (10), indem die Zentrierer (14) an dem Fenster mit den Zentrierlöchern in dem Fahrzeugkörper ausgerichtet werden und das Fenster in die Fensteröffnung gepresst wird.

## Revendications

1. Fixation auto - distributrice (14) utilisant un adhésif à prise rapide comprenant, en combinaison :
un corps (32) ayant à l'intérieur un réservoir à adhésif (34) et une bride incorporée (40) ;
un piston plongeur (38) dans ledit réservoir scellant celui-ci et se projetant à partir de celui-ci pour que la dépression dans le réservoir expulse l'adhésif (36) qui est dans le réservoir à l'intérieur de l'interface (54) formée entre la dite bride (40) et une surface quand la fixation est pressée contre la surface ; et
un adhésif dans le réservoir ;
**caractérisé en ce que** l'adhésif (36) est un adhésif durcissable aux UV et **en ce que** ledit réservoir (34) et ledit piston plongeur (38) sont formés d'un matériau opaque aux UV et ladite bride (40) est formée d'un matériau transparent aux UV.

2. Fixation selon la revendication 1 dans laquelle ledit réservoir (34) est séparé du corps (32) et ledit corps (32) est transparent aux UV.

3. Fixation selon la revendication 1 dans laquelle ledit réservoir (34) est formé dans le corps (32) d'un matériau opaque aux UV et la bride (40) du corps (32) est formée d'un matériau transparent aux UV.

4. Fixation selon la revendication 1, dans laquelle ledit corps (32) est formé d'un matériau transparent aux UV et dans laquelle il y a un revêtement opaque aux UV sur le corps (32) couvrant le réservoir (34).

5. Fixation selon la revendication 1 dans laquelle ladite bride (40) est équipée de portions surélevées (58) opposées à une surface à laquelle la fixation doit être fixée pour déterminer l'épaisseur de la couche d'adhésif expulsé dans ladite interface (54).

6. Fixation selon la revendication 1 dans laquelle ledit piston plongeur (38) se projette à partir du réservoir (34) au-dessous de ladite bride (40) pour être en prise avec une surface à laquelle la fixation doit être fixée pour expulser l'adhésif (36) du réservoir (34) lorsque la fixation est pressée contre une telle surface.

7. Fixation selon l'une des revendications 1 à 6, dans laquelle le réservoir est transparent à la lumière visible.

8. Fixation selon l'une des revendications 1 à 6, dans laquelle le piston plongeur est transparent à la lumière visible.

9. Fixation selon l'une des revendications 1 à 6 dans laquelle à la fois le réservoir et le piston plongeur sont transparents à la lumière visible.

10. Méthode pour le placement d'une vitre (12) dans un véhicule à moteur (10) comprenant les étapes consistant à :
fournir des trous de placement dans le corps du véhicule au niveau d'une ouverture de fenêtre ;
presser des positionneurs adhésifs auto - distributeurs (14) selon l'une des revendications 1 à 9 contre la fenêtre (12) pour extruder l'adhésif (36) dans l'interface (54) entre la bride et la fenêtre ;
orienter un rayonnement UV contre la bride (40) pour durcir l'adhésif (36) dans l'interface (54) entre la fenêtre (12) et la bride (40) ; et
monter la fenêtre (12) dans le véhicule à moteur (10) en alignant les positionneurs (14) sur la vitre avec les trous de placement dans le corps du véhicule et en pressant la fenêtre dans l'ouverture de fenêtre.
